# EUROPEAN PATENT SPECIFICATION

(11) **EP 3 344 785 B1**
(45) Date of publication and mention of the grant of the patent: **04.10.2023**
(21) Application number: 16767039.7
(22) Date of filing: 29.08.2016
(51) Int. Cl.: C13K 13/00, B01D 53/14, B01J 31/40, D21C 3/00, D21C 11/00

(54) **PROCESS FOR THE RECOVERY OF HYDROCHLORIC ACID**
VERFAHREN ZUR RÜCKGEWINNUNG VON SALZSÄURE
PROCÉDÉ DE RÉCUPÉRATION D'ACIDE CHLORHYDRIQUE

(30) Priority: 31.08.2015 NL 2015374
(43) Date of publication of application: 11.07.2018
(73) Proprietor: Avantium Knowledge Centre B.V., 1014 BV Amsterdam (NL)
(72) Inventor: MCKAY, Benjamin, 1014 BV Amsterdam (NL); VAN DER WAAL, Jan Cornelis, 1014 BV Amsterdam (NL); GRUTER, Gerardus Johannes Maria, 1014 BV Amsterdam (NL)
(74) Representative: Wurfbain, Gilles L.
(86) International application number: PCT/NL2016/050600
(87) International publication number: WO 2017/039439

(56) References cited:
- EP-A1- 2 620 442
- WO-A1-93/05186
- CA-A- 738 946
- US-A- 3 251 716
- US-A1- 2011 028 710
- US-A1- 2014 352 688

## Description

The present invention relates to a process for the recovery of hydrochloric acid. In particular, it relates to a process for the recovery of hydrochloric acid from a lignin composition that comprises lignin, water and hydrochloric acid.

Lignin is one of the most common biopolymers. It comprises cross-linked phenol polymers and is believed to contain coumaryl alcohol, coniferyl alcohol and sinapyl alcohol as building blocks. It constitutes a major part of various biomass materials. It is important for the formation of cell walls, especially in wood. Lignin can be obtained in the hydrolysis of wood and similar lignocellulosic materials. Such hydrolysis is typically used for the recovery of mono- and oligosaccharides from wood and such lignocellulosic biomass; lignin is often obtained as residue after the hydrolysis for saccharides recovery.

The hydrolysis of wood and other lignocellulosic material has been known for many years. Lignocellulosic material typically comprises cellulose and hemicellulose from which mono- and oligosaccharides can be obtained in addition to lignin. There appears to be a number of approaches to liberate mono- and oligosaccharides from lignocellulosic material. One of the approaches is enzymatic hydrolysis. This method requires a pre-treatment, such as steam explosion, i.e. a method wherein biomass particles are exposed to high pressure superheated steam before a brusque pressure drop, to make the cellulose and hemicellulose accessible for enzymatic hydrolysis (cf. US 2012/0104313 and US 2013/0078677).

A second approach is the hydrolysis with hot compressed or even supercritical water. Such hydrolysis requires the application of high temperatures, e.g. 200 to 400 °C and high pressures, e.g. 50 to 250 bar, at short contact times. An example of such hydrolysis is described in US 2013/239954.

Another approach is the use of dilute acid. Examples of such a method are the Schöller and Madison processes which are described in e.g. US 5879463 and DE 640775. While sulfuric acid is used in these actual processes, the use of dilute hydrochloric acid and phosphoric acid is also known in the art.

A further method uses concentrated acids. These methods include the Bergius Rheinau process, as described in e.g. DE 362230 and US 419937. An alternative process uses concentrated sulfuric acid (cf. US 5188673). The biomass does not require a pre-treatment. The operating temperature during the hydrolysis can be relatively low; the temperature can be around room temperature and is typically at most 110 °C.

In the Bergius Rheinau process wood is shredded to chips which are treated with concentrated hydrochloric acid. During the treatment for instance about two-thirds of the wood is dissolved by the acid in the form of mono- and oligosaccharides, and the rest, e.g. about one-third remains as lignin. The dissolved fraction comprises mono- and oligosaccharides, together with water and hydrochloric acid. This fraction is generally referred to as the hydrolysate. The lignin fraction is obtained as a solid fraction that comprises lignin, residual water and hydrochloric acid.

It is evident that it is desirable to recover the hydrochloric acid, both from an environmental and from an economic standpoint. In the prior art the focus has been mainly on the recovery of hydrochloric acid from the hydrolysate. For example, US2011/0028710 describes a process where a polysaccharide-containing material is hydrolyzed to carbohydrates. The formed HCl-concentrate carbohydrate-containing solution is treated for partial removal of HCl, thereby forming a carbohydrate-containing dilute aqueous HCl solution. For the partial removal of HCl, HCl distillation or stripping can be used. The resulting carbohydrate-containing dilute aqueous HCl solution is subsequently brought into contact with a specific water-immiscible extractant comprising an oil soluble amine, an oil soluble weak organic acid and a solvent for the amine and organic acid, whereby a HCl-depleted carbohydrate-containing solution is formed.

However, it is desirable to free also the lignin by-product from water and hydrochloric acid. The literature has suggested to wash the lignin with water, but the amount of water required has been found too large to be feasible. Moreover, the result is a very dilute hydrochloric acid solution that requires extensive concentration before it can be recycled to the hydrolysis. In US 2012/0279497 and US 2012/0227733 it has been suggested to contact the wet hydrochloric acid-containing lignin with an organic solvent that is scarcely soluble in water and to evaporate water, hydrochloric acid and the organic solvent to yield a lignin composition having a reduced water and hydrochloric acid content. It is evident that this process involves the application of complicated extraction, evaporation and separation treatments. In US 3251716 a process is described wherein a lignocellulosic material is hydrolyzed, also referred to as digested, with concentrated hydrochloric acid to yield a hydrolysate containing mono- and oligosaccharides, hydrochloric acid and water, and a lignin composition containing aqueous hydrochloric acid and lignin. Hydrochloric acid is then separated from lignin by centrifuge. The hydrochloric acid separated is recycled to the hydrolysis of the lignocellulosic material. The remaining lignin still contains significant amounts of water and hydrochloric acid. Therefore the lignin is passed to a dryer. This is a heated zone that is maintained at a temperature up to 360 °C where the lignin is in contact with a vapor. This vapor consists of a superheated mixture of water and hydrochloric acid and runs co-currently with the wet lignin. The temperature of the superheated vapor is 340 to 360 °C. After leaving the dryer a portion of the vapor is condensed, whereas the main portion is circulated through a superheater. Since the corrosive action of hydrochloric acid at higher temperatures increases, it is evident that the use of superheated hydrochloric acid vapors has the drawback that the risk of severe corrosion also increases. Further, since the hydrochloric acid vapor cools down whilst passing over the wet lignin to about 175 °C, the thermal efficiency of such an operation is flawed now that the water/hydrochloric acid vapor has to be heated to superheating temperatures of 340 to 360 °C.

Therefore, it is desirable to provide for a process wherein there is no need for heating a corrosive gas to temperatures in the range of 340 to 360 °C and wherein the energy input is limited. Accordingly, the present invention provides a process for the recovery of hydrochloric acid from a lignin composition, comprising providing a particulate lignin composition that comprises lignin, water and hydrochloric acid; contacting the particulate lignin composition with a stream of stripping gas comprising an aprotic gas to obtain an acidified vapor stream that comprises water vapor, hydrochloric acid and aprotic gas; and recovering hydrochloric acid from the acidified vapor stream.

The present process has the advantage that a stream of stripping gas can be used that does not have a corrosive component. It has further been found that the stream of stripping gas does not need to be heated to the very high temperatures as disclosed in US 3251716. That mitigates the corrosive action of the stripping gas stream and also saves on heating requirements and costs. In this specification the term "aprotic" has the commonly known meaning of being incapable of acting as a proton donor.

As starting material for the present process a particulate lignin composition is used that comprises water and hydrochloric acid in addition to lignin. Such a lignin composition is typically obtained in the hydrolysis of lignocellulosic material. Lignocellulosic biomass can be broadly classified into virgin biomass, waste biomass and energy crops, such as starch and sucrose-containing crops. Virgin biomass includes all naturally occurring terrestrial plants such as trees, bushes and grass. Waste biomass is produced as a low value byproduct of various industrial sectors such as agricultural, such as corn stover, sugarcane bagasse, straw, etc., waste paper, forestry, such as saw mill and paper mill discards. Energy crops are crops with high yield of lignocellulosic biomass produced to serve as a raw material for production of second generation biofuel. Examples include switch grass and miscanthus, also known as elephant grass. The hydrolysis is typically conducted to produce oligosaccharides and monosaccharides from cellulose and hemicellulose, yielding e.g. cellotriose, cellobiose and glucose from cellulose, and mannose, xylose, galactose, arabinose and their oligomers from hemicellulose. The hydrolysis may be carried out by the action of dilute hydrochloric acid or concentrated hydrochloric acid. Hence, the lignin composition used in the process according to the invention has preferably been obtained from a hydrolysis of lignocellulosic material with hydrochloric acid. Lignin compositions obtained in the Bergius Rheinau process are particularly preferred. A summary of an example of this process is provided in F. Bergius, Current Science, 1937, 632-637. According to such a process a battery of diffusers is loaded with wood chips, optionally mixed with a proportion of saw dust. The wood chips are suitably dried to a moisture content of at most 8%wt, based on the dried wood chips. In a pseudo counter-current mode a concentrated hydrochloric acid solution in water, e.g. having a hydrochloric acid concentration of 35 to 45 %wt, based on the solution, is fed into the last diffuser. During the filling of the diffuser a digestion solution will be formed containing dissolved saccharides in addition to hydrochloric acid and water. When the diffuser is filled with the digestion solution and concentrated hydrochloric acid solution is continued to be fed into the last diffuser, the digestion solution will overflow to the penultimate diffuser and so on until there is an overflow of digestion solution from the first diffuser. The digestion solution is then withdrawn from the first diffuser as the hydrolysate and saccharides are recovered therefrom. Lignin stays in the diffusers. According to the prior art the lignin is washed with water. Then the washed lignin is dried and can be used e.g. in form of briquettes as fuel for the hydrolysis plant.

According to the present invention there is no need to thoroughly wash the lignin with water. Instead the lignin is preferably passed through a press or centrifuge to remove adherent hydrochloric acid and water and downstream of the press or centrifuge the lignin is contacted with a stream of the stripping gas in accordance with the invention. Accordingly, the present invention also provide a process for the production of a lignin product, comprising hydrolyzing a particulate lignocellulosic material with hydrochloric acid to obtain a dissolved saccharides-containing hydrolysate and a particulate lignin composition that comprises lignin, hydrochloric acid and water, and contacting at least part of the particulate lignin composition with a stream of a stripping gas that comprises an aprotic gas to obtain an acidified vapor stream that comprises water vapor, hydrochloric acid and aprotic gas, and a hydrochloric acid-lean lignin composition; and recovering the hydrochloric acid-lean lignin composition as lignin product. The particulate lignin composition comprises lignin, water and hydrochloric acid. Dependent on the lignocellulosic material that is hydrolyzed, other components may also be comprised in the lignin composition. Degradation products of saccharides may be present, such as furfural, hydroxymethylfurfural, phenolic compounds and organic acids such as acetic acid and levulinic acid. Inorganic components may also be present in minor amounts. Upon combustion they form ash. Examples of inorganic components include sodium and potassium salts and silica. The amount of these other components is typically at most 5 %wt, based on the particulate lignin composition. The complete particulate lignin composition may be contacted with the stripping gas. Preferably, adherent water and hydrochloric acid is removed from the particulate lignin composition by passing it through a press. Alternatively, the particulate lignin composition may be subjected to a centrifugal separation. It is also feasible to wash some of the hydrochloric acid from the particulate lignin composition by means of water and/or an aqueous hydrochloric acid solution. Hence, the particulate lignin composition is suitably disposed of adherent hydrochloric acid by passing through a press and/or by leading into a centrifuge and/or by washing with water and/or an aqueous hydrochloric acid solution.

According to the process of US 3251716 the lignin is dried by means of hydrochloric acid/water vapor at a temperature of 340 to 360 °C. Such high temperatures are not required in the process of the present invention. It has been found that the particulate lignin composition is preferably contacted with the stream of stripping gas at a temperature in the range of 150 to 280 °C, preferably from 180 to 250 °C. When the temperature is below the lowest value of this range the drying takes too long to be feasible. It is possible to operate at temperatures exceeding the maximum value of this range. However, no additional advantages are then obtained, and such operation only leads to unnecessary costs. Moreover, by operating at a modest temperature an increase of the level of corrosive action of the acidified vapor stream that takes place at superheated temperature can be avoided.

The particulate lignin composition may be brought to the desired temperature by means of any suitable equipment. It is thus feasible to introduce the particulate lignin composition into a heat exchanger wherein the heat is provided via indirect heat exchange via the wall and/or heat exchange elements, such as heat exchange coils or plates or tubes. The temperature of the heat exchange fluid that is used in such equipment will suitably be set at such a value that the particulate lignin composition is present at a temperature in the desired range. In some embodiments, the heat for the particulate lignin composition may at least partly be provided by the stripping gas stream. In such cases, the stream of stripping gas is suitably heated. When the stream of stripping gas is heated, it is suitably heated to a temperature in the range of 40 to 150 °C before it is contacted with the particulate lignin composition. In some embodiments the stream of stripping gas can be supplied at ambient temperature. The stream of stripping gas is thus suitably at a temperature of 20 to 150 °C before it is contacted with the particulate lignin composition. It has been found that the stripping action is most effective when the stream of stripping gas is contacted counter-currently with the particulate lignin composition.

There is no need to apply specific pressures. The process described in US 2012/0279497 and US 2012/0227733 purify the lignin by evaporating water, hydrochloric acid and the organic solvent used at pressures below 1 atm. The present process can suitably operate at atmospheric pressure, although it is feasible to carry out the process at a pressure in the range of 1 to 5 bara.

The stripping gas in the stream of stripping gas comprises an aprotic gas wherein the aprotic gas is a combustion gas. The stripping gas comprises such gas at the conditions of the contact between the particulate lignin composition and the stream of stripping gas. That implies that at other conditions the aprotic gas may have a different aggregate phase, e.g. be liquid.

The combustion gases may originate from whatever combustion process, e.g. from a heater that supplies energy to the hydrolysis of lignocellulosic material, or from a heater that provides the energy for heating the particulate lignin composition. The use of a combustion gas has the advantage that it generally becomes available at elevated temperature and also that it contains suitable aprotic gases such as nitrogen, carbon dioxide and optionally carbon monoxide. The oxygen content in combustion gases has been significantly reduced compared to air, so that any risk for combustion of the lignin is further reduced. The use of the above-mentioned inorganic gases and also that of non-condensable organic gases, such as C₁-C₄ hydrocarbons, creates the possibility to pass these gases as stripping gas along the lignin composition without heating these gases. In this case, the heat required for the evaporation of water and hydrochloric acid can be provided by indirect means, such as via surfaces heated by a heat exchange medium, such as hot oil or steam. When the inorganic gases are used in the stripping gas, these gases can be discharged after having recovered the hydrochloric acid from them. That is economic and environmentally safe.

The duration of the contact between the particulate lignin composition and the stream of stripping gas is not critical. Factors that may influence the desired duration include the temperature of the particulate lignin composition, the temperature of the stream of stripping gas, the heat capacity of the aprotic gas, the rate at which the stream of stripping gas is supplied, expressed as volume of stripping gas per kilogram particulate lignin composition, and the desired level of moisture and/or hydrochloric acid in the lignin product. Typically the amount of stripping gas per kilogram of particulate lignin composition is in the range of 0.1 to 25 Nm³/kg, preferably from 0.5 to 10 Nm³/kg. The duration of the contact may typically be varied from 5 to 300 minutes, preferably from 20 to 120 minutes. The duration can be varied by applying different flow rates for the stripping gas. Suitable values for the flow rate of the stream of stripping gas are in the range of 25 to 1000 Nm³ stripping gas per kg lignin composition per hour, preferably from 50 to 400 Nm³/kg/h, more preferably from 100 to 250 Nm³/kg/h.

The skilled person will realize what equipment suitably can be used for operating the process according to the present invention. It is feasible to pass the stripping gas through or along a bed of the lignin composition. Such can be achieved in a column reactor. Alternatively, the lignin composition can be subjected to a stripping gas in a dryer. Equipment that is at his disposal includes flash dryers, paddle dryers, rotary drum dryers, rotary tube dryers, rotary louver dryers, fluidized bed dryers, cabinet dryers, tunnel dryers and conveyor dryers. A very suitable dryer appears to be a rotary tube dryer. The particulate lignin composition therein is rotated thereby reducing the effect of diffusion, and the stream of stripping gas is passed through in a counter-current or co-current mode, thereby promoting the separation of water and hydrochloric acid from the lignin composition. The heat for drying is provided by a heat exchange medium that flows through the tubes in the rotary tube dryer.

It is advantageous to recover the hydrochloric acid from the acidified vapor stream. There are several methods for achieving the recovery of hydrochloric acid. Suitably the acidified vapor stream can be subjected to absorption or adsorption to recover hydrochloric acid. One suitable method involves passing the acidified vapor stream along an adsorbent that selectively adsorbs hydrochloric acid, which can be followed by desorption. Typically such adsorbents include metal oxides that have a significant surface area, e.g. a BET surface area of at least 200 m²/g. Suitable adsorbents include alumina, zeolite-alumina mixtures and alumina that is promoted with an alkali metal oxide. Examples of such adsorbents are disclosed in e.g. US 4762537 and US 5316998.

Adsorbents are most commonly used as means to purify contaminated gas streams. Their capacity therefore tends to be rather limited. If large amounts of hydrochloric acid are to be recovered from a large acidified vapor stream the equipment for the adsorbents must be large, too. The sheer size of such equipment may render the recovery very expensive. Therefore, it is preferred to subject the acidified vapor stream to absorption with a liquid wherein the hydrochloric acid is selectively dissolved. It has been found that the hydrochloric acid may also be easily absorbed in an aqueous absorbent. Therefore, the acidified vapor stream is subjected to absorption with an aqueous absorbent, to yield acid-loaded absorbent. The aqueous absorbent comprises water. In an embodiment the absorbent may comprise one or more additives to promote the absorption of hydrochloric acid and/or to facilitate the work up of the acid-loaded absorbent. The absorption may be promoted by using watersoluble amines, such as triethanol amine, di-isopropanol amine or methyl diethanol amine. Also inorganic basic compounds can be used to promote absorption of hydrochloric acid. However, when the acid-loaded absorbent is to be re-used in e.g. the hydrolysis of lignocellulosic material, it is advantageous that the aqueous absorbent comprises mainly water. It may consist of water, but in practice the aqueous absorbent may contain some hydrochloric acid. Dependent on the process the aqueous absorbent may also comprise minor amounts organic compounds, such as methanol and/or acetic acid. In this way the acid-loaded absorbent comprises mainly hydrochloric acid and water, preferably substantially consists of hydrochloric acid and water. Since the solubility of hydrochloric acid in water is very good, the aqueous absorbent may comprise an aqueous solution of hydrochloric acid. Suitably, such a solution comprises hydrochloric acid in relatively low concentrations, e.g. up to 5%wt, based on the aqueous absorbent. The content of water in the aqueous absorbent may vary from 80 to 100%wt, preferably from 95 to 100 %wt, based on the aqueous absorbent. The use of such dilute hydrochloric acid solutions as aqueous absorbent has the advantage that other gases that may have a tendency to dissolve in water, such as carbon dioxide, are to a certain extent prevented from dissolving into the absorbent. The use of an aqueous absorbent that comprises water, optionally containing hydrochloric acid, or preferably substantially consists of water or substantially consists of water and hydrochloric acid, is further advantageous, as the absorbent can be used until an acid-loaded absorbent having the desired hydrochloric acid concentration is obtained. If so, the acid-loaded absorbent can then be recycled to a hydrolysis of lignocellulosic material. If the hydrolysis is conducted with diluted hydrochloric acid, no further treatment of the acid loaded absorbent may be necessary. If the hydrolysis is carried out with concentrated hydrochloric acid, such as in the Bergius Rheinau process, an acid-loaded absorbent as a relatively concentrated solution of hydrochloric acid is obtained. The concentration of hydrochloric acid in such acid-loaded absorbents may be as high as more than 20%wt, calculated as hydrochloric acid based on the acid-loaded absorbent. Nevertheless, some further concentration to even higher concentrations of hydrochloric acid may be desired.

The use of an aqueous absorbent is also advantageous when an organic compound that under standard conditions is liquid, is used as aprotic gas. For instance, when the aprotic gas is a hydrocarbon with five or more carbon atoms, and the acidified vapor stream is contacted with an aqueous absorbent, the organic compound condenses and is easily separated from the aqueous absorbent by phase separation. The organic compound is then isolated and can be re-heated and re-used as aprotic gas in the stream of stripping gas.

As indicated above, the acid-loaded absorbent can be used to recycle hydrochloric acid to earlier steps in the process, e.g. the hydrolysis of lignocellulosic material. When the hydrolysis is carried out with a dilute solution of hydrochloric acid the acid-loaded absorbent may be used as such. Alternatively, some treatment of the absorbent may be carried out to obtain a solution with the desired hydrochloric acid concentration. When the hydrolysis is conducted with concentrated hydrochloric acid concentration, as in the Bergius Rheinau process, the acid-loaded absorbent may require additional concentrating in order to render it suitable for recycle to the hydrolysis. A challenge is then provided by the fact that hydrochloric acid and water form an azeotrope, wherein the hydrochloric acid concentration is about 18 to 23 %wt, depending on the pressure. Since the Bergius Rheinau process and similar processes operate at higher hydrochloric acid concentrations, the azeotrope is typically unsuitable for direct re-use in the hydrolysis. It is known in the art to obtain hydrochloric acid at higher concentration than in the azeotrope. A feasible method is to feed a dilute solution into a distillation column that operates at low pressure, e.g. 0.01 to 0.9 bar, to obtain a top stream of water and a hydrochloric acid stream at the bottom. The concentration of the bottom stream is suitably that of the azeotrope, e.g. about 23%wt hydrochloric acid. A portion of the bottom stream is then fed into a second distillation column that operates at higher pressure, e.g. from 2 to 5 bar, resulting in a concentrated hydrochloric acid stream over the top, having a concentration above 30 %wt and a bottom stream that has a low hydrochloric acid concentration, suitably that of the azeotrope, e.g. about 18 %wt. The bottom stream is then recycled to the first distillation column. In this way all hydrochloric acid is obtained in concentrated form.

Alternatively, the loaded absorbent may be subjected to extractive distillation where a dilute hydrochloric acid solution is fed into a distillation column wherein aqueous hydrochloric acid is contacted with an azeotrope-breaking component, typically a chloride salt, such as calcium or magnesium chloride. This leads to a top product of concentrated hydrochloric acid and a bottom product of a dilute solution that contains the chloride salt. The chloride salt is concentrated in a separate vessel and recycled to the distillation column. An extractive distillation process is e.g. described in US 3779870. Since the use of a Bergius Rheinau process is preferred, the acid-loaded absorbent is preferably subjected to one or more distillation steps to yield a hydrochloric acid-rich fraction with a higher concentration than the acid-loaded absorbent. Preferably, at least a portion of this hydrochloric acid-rich fraction, optionally after further acid concentration, is recycled to a hydrolysis of lignocellulosic material.

The particulate lignin composition that is produced in the process according to the present invention contains minor amounts of water and hydrochloric acid. In that it differs from the lignin produced in the process according to US 3251716, that is contacted with superheated water and hydrochloric acid. By this treatment the lignin will absorb significant quantities of hydrochloric acid.

The particulate lignin composition also differs from the treated lignin composition obtained in the process of US 2012/0279497. This treated lignin may contain less than 10,000 ppm hydrochloric acid and is water-free. The absolute dryness entails a risk. The treated lignin is not only dry but also tends to have a high degree of dustiness. Both the dryness and the dustiness are factors that raise the risk of explosion or fire. Such risk represents a considerable disadvantage of the treated lignin according to US 2012/0279497.

The present process results in a particulate lignin composition that has enough water to eliminate the risk of explosion and has a sufficiently low amount of hydrochloric acid to be safe. Accordingly, the present invention also provides a particulate lignin composition comprising lignin, hydrochloric acid and water, wherein the content of hydrochloric acid is in the range of 100 to 10,000 parts by weight per million (ppmw), preferably from 500 to 5000 ppmw, based on the weight of the particulate lignin composition and the content of water is in the range of 0.1 to 2 %wt, based on the weight of the particulate lignin composition. The lignin content in the particulate lignin composition will suitably be in the range of 98 to 99.9%wt.

The following example illustrates the sequence of the proposed process wherein it has been simplified by replacing the combustion gas by nitrogen as aprotic gas.

### EXAMPLE

A series of vessels were loaded with a lignin composition that comprised about 49.5 %wt of lignin, on a dry basis, and about 50.5 %wt of a concentrated hydrochloric acid solution, containing 37%wt of hydrochloric acid. The hydrochloric acid content in the lignin composition was therefore 18.7%wt.

Nitrogen gas was passed as stream of stripping gas along the bed of the lignin composition at a flow rate of 87.3 or 174.5 Nm³/kg/h. The nitrogen gas was supplied at ambient temperature, i.e. about 20 °C, and pre-heated to the drying temperature before being contacted with the lignin composition. The lignin compositions were heated to various temperatures. At different periods of supply of the stripping gas the hydrochloric content of the lignin product then obtained was determined.

The results are shown in the Table below. The Table indicates the temperature at which the lignin composition is contacted with the stripping gas ("T"), the flow rate of the stream of stripping gas ("Flow"), the time during which the lignin composition was contacted with the stripping gas ("t"), the total amount of stripping gas supplied per weight unit of lignin composition when the lignin product was removed for determination of the hydrochloric acid content ("Gas") and the content of hydrochloric acid on the lignin product, expressed as hydrochloric acid on the lignin product ("HCl_{prod}").

**Table**

| Exp. No. | T, °C | t, hr | Flow, Nm³/kg/h | Gas, Nm³/kg | HCl_{prod}, %wt |
|---|---|---|---|---|---|
| 1 | 170 | 1.30 | 174.5 | 3.78 | 1.08 |
| 2 | 170 | 2.30 | 174.5 | 6.69 | 0.88 |
| 3 | 170 | 3.67 | 174.5 | 10.67 | 0.71 |
| 4 | 170 | 6.10 | 174.5 | 17.74 | 0.59 |
| 5 | 200 | 0.17 | 87.3 | 0.36 | 0.73 |
| 6 | 200 | 0.43 | 87.3 | 0.95 | 0.50 |
| 7 | 200 | 0.67 | 87.3 | 1.45 | 0.45 |
| 8 | 200 | 1.83 | 87.3 | 4.00 | 0.39 |
| 9 | 200 | 6.00 | 87.3 | 17.09 | 0.36 |
| 10 | 200 | 0.25 | 174.5 | 1.09 | 0.69 |
| 11 | 200 | 0.62 | 174.5 | 2.69 | 0.55 |
| 12 | 200 | 0.80 | 174.5 | 3.49 | 0.47 |
| 13 | 200 | 1.25 | 174.5 | 5.45 | 0.34 |
| 14 | 220 | 0.17 | 174.5 | 0.72 | 0.46 |
| 15 | 220 | 0.43 | 174.5 | 1.89 | 0.38 |
| 16 | 220 | 0.80 | 174.5 | 3.49 | 0.35 |
| 17 | 220 | 1.00 | 174.5 | 4.36 | 0.26 |
| 18 | 220 | 1.25 | 174.5 | 5.45 | 0.26 |

The results show that hydrochloric acid can be efficiently removed from hydrochloric acid-containing lignin compositions. Especially at elevated temperatures and at flow rates above 100 Nm³/kg/h, the level of hydrochloric acid that remains in the lignin product can be reduced to a low value within a short period and thus with the use of a limited amount of stripping gas. That has the advantage that a smaller amount of stripping gas has to be subjected to e.g. absorption to recover the hydrochloric acid entrained.

## Claims

1. Process for the recovery of hydrochloric acid from a lignin composition, comprising
- providing a particulate lignin composition that comprises lignin, water and hydrochloric acid;
- contacting the particulate lignin composition with a stream of stripping gas comprising an aprotic gas to obtain an acidified vapor stream that comprises water vapor, hydrochloric acid and aprotic gas; and
- recovering hydrochloric acid from the acidified vapor stream,
wherein the aprotic gas is a combustion gas, and
wherein the acidified vapor stream is subjected to absorption with an aqueous absorbent, to yield acid-loaded absorbent,
and wherein the aqueous absorbent substantially consists of water.

2. Process according to claim 1, wherein the particulate lignin composition has been obtained from a hydrolysis of lignocellulosic material with hydrochloric acid.

3. Process according to claim 1 or 2, wherein the particulate lignin composition is contacted with the stream of stripping gas at a temperature in the range of 150 to 280 °C, preferably in the range of 180 to 250 °C.

4. Process according to any one of claims 1 to 3, wherein the stream of stripping gas is at a temperature in the range of 20 to 150 °C before it is contacted with the particulate lignin composition.

5. Process according to any one of claims 1 to 4, wherein the stream of stripping gas is contacted counter-currently with the particulate lignin composition.

6. Process according to any of claims 1to 5, wherein the acid-loaded absorbent is subjected to one or more distillation steps to yield a hydrochloric acid-rich fraction with a higher acid concentration than the acid-loaded absorbent.

7. Process according to claim 6, wherein at least a portion of the hydrochloric acid-rich fraction, optionally after further acid concentration, is recycled to a hydrolysis of lignocellulosic material.

8. Process for the production of a lignin product, comprising hydrolyzing a particulate lignocellulosic material with hydrochloric acid to obtain a dissolved saccharides-containing hydrolysate and a particulate lignin composition that comprises lignin, hydrochloric acid and water, and contacting at least part of the particulate lignin composition with a stream of stripping gas that comprises an aprotic gas to obtain an acidified vapor stream that comprises water vapor, hydrochloric acid and aprotic gas, and a hydrochloric acid-lean lignin composition; and recovering the hydrochloric acid-lean lignin composition as lignin product, wherein the aprotic gas is a combustion gas
wherein the acidified vapor stream is subjected to absorption with an aqueous absorbent, to yield acid-loaded absorbent,
and wherein the aqueous absorbent substantially consists of water.

## Patentansprüche

1. Vorgang für die Rückgewinnung von Salzsäure aus einer Ligninzusammensetzung, umfassend
- Bereitstellen einer teilchenförmigen Ligninzusammensetzung, die Lignin, Wasser und Salzsäure umfasst;
- Inberührungbringen der teilchenförmigen Ligninzusammensetzung mit einem Strippgasstrom, umfassend ein aprotisches Gas, um einen angesäuerten Dampfstrom zu erhalten, der Wasserdampf, Salzsäure und aprotisches Gas umfasst; und
- Rückgewinnen von Salzsäure aus dem angesäuerten Dampfstrom,
wobei das aprotische Gas ein Verbrennungsgas ist, und
wobei der angesäuerte Dampfstrom einer Absorption mit einem wässrigen Absorptionsmittel unterzogen wird, um säurebelastetes Absorptionsmittel zu ergeben,
und wobei das wässrige Absorptionsmittel im Wesentlichen aus Wasser besteht.

2. Vorgang nach Anspruch 1, wobei die teilchenförmige Ligninzusammensetzung aus einer Hydrolyse von lignozellulosehaltigem Material mit Salzsäure erhalten wurde.

3. Vorgang nach Anspruch 1 oder 2, wobei die teilchenförmige Ligninzusammensetzung mit dem Strippgasstrom bei einer Temperatur in dem Bereich von 150 bis 280 °C, vorzugsweise in dem Bereich von 180 bis 250 °C, in Berührung gebracht wird.

4. Vorgang nach einem der Ansprüche 1 bis 3, wobei der Strippgasstrom bei einer Temperatur in dem Bereich von 20 bis 150 °C liegt, bevor er mit der teilchenförmigen Ligninzusammensetzung in Berührung gebracht wird.

5. Vorgang nach einem der Ansprüche 1 bis 4, wobei der Strippgasstrom mit der teilchenförmigen Ligninzusammensetzung in einem Gegenstrom in Kontakt gebracht wird.

6. Vorgang nach einem der Ansprüche 1 bis 5, wobei das säurebelastete Absorptionsmittel einem oder mehreren Destillationsschritten unterzogen wird, um eine salzsäurereiche Fraktion mit einer höheren Säurekonzentration als das säurebelastete Absorptionsmittel zu ergeben.

7. Vorgang nach Anspruch 6, wobei mindestens ein Anteil der salzsäurereichen Fraktion, optional nach weiterer Säurekonzentration, zu einer Hydrolyse von lignozellulosehaltigem Material zurückgeführt wird.

8. Vorgang für die Herstellung eines Ligninprodukts, umfassend ein Hydrolysieren eines teilchenförmigen lignozellulosehaltigen Materials mit Salzsäure, um ein gelöstes saccharidhaltiges Hydrolysat und eine teilchenförmige Ligninzusammensetzung zu erhalten, die Lignin, Salzsäure und Wasser umfasst und mindestens einen Anteil der teilchenförmigen Ligninzusammensetzung mit einem Strippgasstrom in Berührung bringt, der ein aprotisches Gas umfasst, um einen angesäuerten Dampfstrom zu erhalten, der Wasserdampf, Salzsäure und aprotisches Gas umfasst, und eine salzsäuremagere Ligninzusammensetzung; und Rückgewinnen der salzsäuremageren Ligninzusammensetzung als Ligninprodukt, wobei das aprotische Gas ein Verbrennungsgas ist,
wobei der angesäuerte Dampfstrom einer Absorption mit einem wässrigen Absorptionsmittel unterzogen wird, um säurebelastetes Absorptionsmittel zu ergeben,
und wobei das wässrige Absorptionsmittel im Wesentlichen aus Wasser besteht.

## Revendications

1. Procédé de récupération d'acide chlorhydrique à partir d'une composition de lignine, comprenant
- la fourniture d'une composition de lignine particulaire qui comprend de la lignine, de l'eau et de l'acide chlorhydrique ;
- la mise en contact de la composition de lignine particulaire avec un courant de gaz de distillation comprenant un gaz aprotique pour obtenir un courant de vapeur acidifiée qui comprend de la vapeur d'eau, de l'acide chlorhydrique et du gaz aprotique ; et
- la récupération de l'acide chlorhydrique à partir du courant de vapeur acidifiée,
dans lequel le gaz aprotique est un gaz de combustion, et
dans lequel le courant de vapeur acidifiée est soumis à une absorption avec un absorbant aqueux, pour produire un absorbant chargé en acide,
et dans lequel l'absorbant aqueux est essentiellement constitué d'eau.

2. Procédé selon la revendication 1, dans lequel la composition de lignine particulaire a été obtenue à partir d'une hydrolyse de matière lignocellulosique avec de l'acide chlorhydrique.

3. Procédé selon la revendication 1 ou 2, dans lequel la composition de lignine particulaire est mise en contact avec le courant de gaz de distillation à une température dans la plage de 150 à 280 °C, de préférence dans la plage de 180 à 250 °C.

4. Procédé selon l'une quelconque des revendications 1 à 3, dans lequel le courant de gaz de disttillation est à une température dans la plage de 20 à 150 °C avant d'être mis en contact avec la composition de lignine particulaire.

5. Procédé selon l'une quelconque des revendications 1 à 4, dans lequel le courant de gaz de distillation est mis en contact à contre-courant avec la composition de lignine particulaire.

6. Procédé selon l'une quelconque des revendications 1 à 5, dans lequel l'absorbant chargé en acide est soumis à une ou plusieurs étapes de distillation pour produire une fraction riche en acide chlorhydrique avec une concentration d'acide plus élevée que l'absorbant chargé en acide.

7. Procédé selon la revendication 6, dans lequel au moins une partie de la fraction riche en acide chlorhydrique, facultativement après une concentration d'acide supplémentaire, est recyclée dans une hydrolyse de matière lignocellulosique.

8. Procédé de production d'un produit de lignine, comprenant l'hydrolyse d'une matière lignocellulosique particulaire avec de l'acide chlorhydrique pour obtenir un hydrolysat contenant des saccharides dissous et une composition de lignine particulaire qui comprend de la lignine, de l'acide chlorhydrique et de l'eau, et la mise en contact d'au moins une partie de la composition de lignine particulaire avec un courant de gaz de distillation qui comprend un gaz aprotique pour obtenir un courant de vapeur acidifié qui comprend de la vapeur d'eau, de l'acide chlorhydrique et du gaz aprotique, et une composition de lignine pauvre en acide chlorhydrique ; et la récupération de la composition de lignine pauvre en acide chlorhydrique en tant que produit de lignine, dans laquelle le gaz aprotique est un gaz de combustion
dans lequel le courant de vapeur acidifiée est soumis à une absorption avec un absorbant aqueux, pour produire un absorbant chargé en acide,
et dans lequel l'absorbant aqueux est essentiellement constitué d'eau.
